Europäisches Patentamt

European Patent Office

Office européen des brevets

(19)

(11) Publication number: **0 113 435**
**B1**

(12) **EUROPEAN PATENT SPECIFICATION**

(45) Date of publication of patent specification: 07.06.89

(51) Int. Cl.⁴: **C 09 D 5/02, C 09 D 7/00**

(21) Application number: **83112162.9**

(22) Date of filing: **03.12.83**

(54) Opacification of paint.

(30) Priority: **09.12.82 US 448255**
**09.12.82 US 448256**
**09.12.82 US 448257**

(43) Date of publication of application:
**18.07.84 Bulletin 84/29**

(45) Publication of the grant of the patent:
**07.06.89 Bulletin 89/23**

(84) Designated Contracting States:
**DE FR GB IT NL**

(56) References cited:
**EP-A-0 022 633**
**AU-A-509 217**
**DE-A-1 519 244**
**US-A-3 836 495**
**US-A-3 933 579**

(73) Proprietor: **DeSOTO, INC.**
**1700 South Mt. Prospect Road**
**Des Plaines Illinois 60018 (US)**

(72) Inventor: **Smith, Philip M.**
**3917 Johnson Street**
**Western Springs Illinois 60558 (US)**
Inventor: **Hesler, Kenneth K.**
**28 West 270 Timber Lane**
**West Chicago Illinois 60185 (US)**
Inventor: **Lofstrom, John R.**
**1115 Dewey Avenue**
**Evanston Illinois 60202 (US)**
Inventor: **Sikorski, Ursula A.**
**3431 N. Natchez**
**Chicago Illinois 60634 (US)**

(74) Representative: **Patentanwälte Dipl.-Ing. R.**
**Splanemann Dr. B. Reitzner Dipl.-Ing. K.**
**Baronetzky**
**Tal 13**
**D-8000 München 2 (DE)**

Courier Press, Leamington Spa, England.

EP 0 113 435 B1

## Description

This invention relates to the pigmentation of paint using a plurality of opacifying agents in order to enhance the hiding quality of the paint while minimizing the proportion of titanium dioxide which is present as well as the undesired softening of the paint.

A conventional paint comprises a resinous binder which serves to hold together particles of pigment. These particles of pigment obscure the imperfections in the surface of the substrate which is painted, and this obscuring capacity is known as "hide". In modern paints, heavy reliance is placed upon the use of titanium dioxide, rutile, as the pigment because it contributes excellent hide. Unfortunately, this pigment is expensive.

Because of the expense of the titanium pigment, other pigments have been developed, including pigmented vesiculated beads and opaque polymer particles. Both of these are known articles of commerce for use in the paint industry and are less costly than titanium dioxide. However, the pigmented vesiculated beads do not entirely maintain the hide which is reduced in proportion to the amount of titanium which is replaced. The opaque polymer particles do enhance the hide, but these are soft and, when used in large amount, degrade the burnish resistance and scrub resistance of the final paint film.

### Disclosure of invention

In accordance with this invention, an aqueous paint having improved hide at lowered titanium dioxide content comprises water, a resin binder, and pigment dispersed in the water, said pigment containing from 5% to 65% of titanium dioxide, rutile; the aqueous paint is characterized in that the balance of the pigment consists essentially of pigmented vesiculated beads and opaque polymer particles in a ratio of 30/70 to 90/10, the proportion of opaque polymer particles being smaller at higher pigment volume concentration.

The pigment is preferably present in a pigment volume concentration (PVC) of from 20% to 80%.

By limiting the proportion of opaque polymer particles and by using smaller proportions thereof at higher pigment volume concentrations, very little opaque polymer is present in the final paint, and the burnish resistance and the scrub resistance remain high. At the same time, if the replacement of the titanium dioxide is entirely by pigmented vesiculated beads, the improvement in hide is much smaller than that obtainable if it were the sole replacement for the titanium dioxide, and the pigmented vesiculated beads allows this to be achieved without undue loss in burnish and scrub resistance.

All proportions and ratios herein are by volume based on dry solids, unless otherwise specified.

This invention particularly contemplates paints having combinations of properties which are commonly used in the paint industry, these being designated flat paints, satin paints and gloss paints. The term "flat" is well known in the latex paint industry and denotes a paint which deposits a film which, when dry, exhibits a gloss not in excess of 6 regardless of whether a 60° or 85° gloss meter is used to determine the proportion of light which is reflected. The term "satin" is well known in the latex paint industry and denotes a paint which deposits a film, when dry, exhibits a 60° gloss meter reading in the range of 7—20 and an 85° gloss meter reading in the range of 15—70. It will be understood that gloss meters report the proportion of light which is reflected, and that gloss paints reflect more light than do satin paints.

The aqueous flat paints under consideration comprise water, a resin binder, and pigment dispersed in the water, this pigment being present in a pigment volume concentration (PVC) of from 60% to 80%, and the pigment contains from 5% to 25% of titanium oxide, rutile, with the balance of the pigment consisting essentially of pigmented vesiculated beads and opaque polymer particles in a ratio of 80/20 to 90/10. By blending a large proportion of pigmented vesiculated beads with a small proportion of opaque polymer particles in the described combination, very little opaque polymer is present in the paint, and the burnish resistance and the scrub resistance remain high. At the same time, if the replacement of the titanium dioxide is entirely by pigmented vesiculated beads, the improvement in hide would be less than about 20% of that obtainable using opaque polymer partucles as the sole replacement of titanium dioxide. However, the blends of this invention in which only 10% to 20% of the volume of the mixture is opaque polymer particles provides about 60% or more of the hide improvement obtainable using opaque polymer particles as the sole replacement for the titanium dioxide.

The aqueous satin paints under consideration comprise water, a resin binder, and pigment dispersed in the water, this pigment being present in a pigment volume concentration (PVC) of from 25% to 50%, and the pigment contains from 30% to 60% of titanium dioxide, rutile, with the balance of the pigment consisting essentially of pigmented vesiculated beads and opaque polymer particles in a ratio of 60/40 to 70/30. By using such blends containing a minor proportion of opaque polymer particles with 30% to 60% of titanium dioxide (preferably at least 40%), the proportion of opaque polymer is too small to significantly impair the burnish resistance and the scrub resistance. At the same time, hide is improved more than the respective proportions of pigmented vesiculated beads and opaque polymer particles would suggest. This can be seen by graphing the hide at constant total pigment and constant titanium dioxide content with only one of the two replacements being used and then connecting the hide values so obtained by a straight line to show what blends should provide. The hide obtained by the claimed blends are significantly better than that straight line would suggest.

In the gloss paints under consideration, the PVC is from 20% to 40%, the pigment contains from 35% to

2

65% of titanium dioxide, and the balance of the pigment consists essentially of pigmented vesiculated beads and opaque polymer particles in a ratio of 30/70 to 50/50.

This invention is applicable to paints in which the resin is dissolved or colloidally dispersed in the aqueous phase of the paint, but the invention is primarily adapted to latex paints in which the resin binder is constituted by particles of solid resin suspended (emulsified) in the aqueous continuum with the aid of a surfactant.

The opaque polymer particles employed herein are emulsion polymer particles of generally transparent water insoluble polymers having a sufficiently high glass transition temperature to avoid coalescence in the aqueous paints which are involved. These polymer particles have an average particle size in the range of 0.1—2.5 μm and contain microvoids which scatter incident light and thereby produce opacity. These microvoids can be provided in various ways, conveniently by first polymerizing in aqueous emulsion a swellable core polymer containing carboxylic acid groups, typically provided by from 5% to 50% by weight of acrylic acid or methacrylic acid, which enable the core to be swollen with a volatile amine or ammonia. A sheath of polymeric material is then emulsion polymerized around the acid-containing core. The sheathed particles are subjected to the volatile amine or ammonia in aqueous dispersion to swell the core, and the dispersion is dried to remove the swellant and provide a microvoid within the sheathed polymer particle. Typical opaque polymer particles and their production are disclosed in EP—A—0022633 of Rohm and Haas Company. The microvoid-containing product of Example 1C of that disclosure is identified herein as opaque polymer A and will be used in the Examples of this application. In opaque polymer A, the core is a copolymer of 69.65% methyl methacrylate, 29.85% methacrylic acid, and 0.5% ethylene glycol diacrylate having an average particle diameter of 0.35 μm.

This core has a swell ratio at pH 10 with ammonia of around 12, by volume. The described core is sheathed with polymerized methyl methacrylate to an average diameter of 1.0 μm and the sheathed particle is neutralized with ammonium hydroxide and heated to 95°C. to swell the particles to 1.15 μm before the ammonia is evaporated to provide an internal void.

The pigmented vesiculated beads which are used herein are generally larger than the opaque polymer particles and contain a plurality of small cells or vesicles whose walls are provided by the polymer of the beads. These beads have an average particles diameter of from 3 to 30 μ and contain from 10% to 55%, by weight (dry) of finely divided pigment, usually titanium dioxide, rutile. These vesiculated beads are available in commerce and are described in US—A—3,933,579.

They are generally spheroidal with a ratio of bead diameter to mean vesicle diameter of at least 5:1.

The pigment volume concentration is important to the provision of a flat, satin or gloss paint. The narrow ranges of PVC described previously is thus a necessary aspect of these paints.

The proportion of titanium dioxide used herein is also important. In preferred practice, the proportion of titanium dioxide, rutile, is from 7% to 15% for flat paints, at least 40% for satin paints, and from 40% to 50% for gloss paints. This minimizes the cost of the paint at the same time that it maximizes the improvement in hide.

The intended use of the paint, such as for interior or exterior application does not change the parameters of this invention. However, air dry paints are primarily contemplated herein because elevated curing temperatures which destroy the voids in the opaque polymer particles which help to create the desired opacity are counter productive to this invention.

It should be appreciated that it is common in latex paints to include a proportion of extender particles which contribute little to the hide. Such extender particles, illustrated herein by silica or calcium carbonate, are commonly present in amounts up to about 30% of the total particulate content of the paint (up to about 20% for satin paints), but these do not alter the synergism of this invention.

It will also be evident that while the three pigments noted herein are to provide the desired opacity, one may still wish to add small amounts of other pigments or colorants for special purposes, such as to provide desired coloration or to confer other optical effects. Thus, the pigmentation consists essentially of the three pigments which have been discussed since these determine the hiding capacity of the paint.

The invention will be illustrated in the examples which follow.

Example 1—Gloss paint

| Component | Kg. (Lbs) | Liters (Gallons) | Liters (Gallons) (non-volatile) |
|---|---|---|---|
| Titanium dioxide, rutile | 83,32(183,68) | 21,20(5,60) | 21,2 (5,60) |
| Opaque polymer particle | 30,90(68,12) | 30,0(7,92) | 15,1(4,00) |
| Pigmented vesiculated beads | 33,65(74,19) | 30,12(7,96) | 12,1(3,20) |
| Vinyl acrylic latex | 223,32(492,32) | 205,9(54,4) | 102,9(27,20) |
| Additives | 23,12(50,96) | 23,0(6,08) | 3,82(1,01) |
| Water | 68,16(150,27) | 68,28(18,04) | 0(0) |

This paint has a PVC of 32%, titanium dioxide constitutes 44% of the prime pigmentation and the ratio of pigmented vesiculated beads to opaque polymer particles is 44.4/55.6. The burnish resistance and scrub resistance are essentially the same as the same paint pigmented with only titanium dioxide, but the hide is almost as good despite the small amount of opaque polymer present.

Example 2—Flat paint (non-extended)

| Component | Kg. (Lbs) | Liters (Gallons) | Liters (Gallons) (non-volatile) |
|---|---|---|---|
| Titanium dioxide, rutile | 45,36(100) | 11,73(3,1) | 11,73(3,1) |
| Opaque polymer particle | 24,31(53,6) | 23,47(6,2) | 19,92(3,15) |
| Pigmented vesiculated beads | 170,1(375) | 149,1(39,4) | 65,86(17,4) |
| Acrylic latex | 62,96(138,8) | 60,56(16,0) | 29,90(7,9) |
| Additives | 27,85(61,4) | 15,9(4,2) | 7,95(2,1) |
| Water | 117,7(259,5) | 180,0(31,2) | (0)(0) |

This paint has a PVC of 75%, titanium dioxide constitutes 13% of the prime pigmentation and the ratio of pigmented vesiculated beads to opaque polymer particles is 85/15. The burnish resistance and scrub resistance are essentially the same as the same paint pigmented with only titanium dioxide, but the hide is almost as good despite the small amount of opaque polymer present.

Example 3—Flat paint (extended)

| Component | Kg. (Lbs.) | Liters (Gallons) | Liters (Gallons) (non-volatile) |
|---|---|---|---|
| Titanium dioxide, rutile | 23,10(50,92) | 5,98(1,58) | 5,98(1,58) |
| Opaque polymer particle | 21,60(47,31) | 20,82(5,50) | 10,52(2,78) |
| Pigmented vesiculated beads | 144,1(317,73) | 126,2(33,34) | 55,90(14,77) |
| Silica extender | 45,51(100,33) | 17,22(4,55) | 17,22(4,55) |
| Acrylic latex | 62,95(138,78) | 60,41(15,96) | 29,90(7,90) |
| Additives | 27,85(61,40) | 15,90(4,20) | 8,10(2,14) |
| Water | 131,76(290,47) | 132(34,87) | 0,00(0,00) |

This paint has a PVC of 75%, titanium dioxide constitutes 8% of the prime pigmentation and the ratio of pigmented vesiculated beads to opaque polymer particles is 84/16. The extender is 19% of the total pigmentation. Extender may be added up to 30% of pigment volume to improve film properties, as long as the prime pigment ratios of titanium dioxide, opaque polymer particles and pigmented vesiculated beads are maintained. Again, the burnish resistance and scrub resistance and essentially the same as the same paint pigmented with only titanium dioxide, but the hide is almost as good despite the small amount of opaque polymer present.

Example 4—Satin paint

| Component | Kg. (Lbs.) | Liters (Gallons) | Liters (Gallons) (non-volatile) |
|---|---|---|---|
| Titanium dioxide rutile | 94,18(207,64) | 27,25(7,20) | 27,25(7,20) |
| Opaque polymer particle | 18,54(40,87) | 17,98(4,75) | 9,08(2,40) |
| Pigmented vesiculated beads | 42,07(92,74) | 37,66(9,95) | 15,14(4,00) |
| Vinyl acrylic latex | 215,93(476,04) | 199,1(52,60) | 95,54(26,30) |
| Additives | 20,85(45,96) | 20,86(5,51) | 3,18(0,84) |
| Water | 75,53(166,52) | 75,66(19,99) | 0,00(0,00) |

This paint has a PVC of 34%, titanium dioxide constitutes 53% of the prime pigmentation and the ratio of pigmented vesiculated beads to opaque polymer particles is 62/38. The burnish resistance and scrub resistance are essentially the same as the same paint pigmented with only titanium dioxide, but the hide is almost as good despite the small amount of opaque polymer present.

Note 1

In all examples, the opaque polymer particles were provided by a commercial product called Phophaque OP-42® marketed by Rohm and Haas of Philadelphia, Pennsylvania.

Note 2

In all examples, the pigmented vesiculated beads were provided by a commercial product called Spindrift PVB® made by The Enterprise Companies, Wheeling, Illinois.

Note 3

The vinyl acrylic latex referred to in Examples 1 and 4 was an aqueous emulsion copolymer of 84% by weight vinyl acetate, 14% by weight n-butyl acrylate and 2% by weight of the 2-hydroxypropyl maleate ester of 2-hydroxyethyl ethylene urea. A suitable commercially available latex is UCAR 367® available from Union Carbide Corporation of New York.

The acrylic latex in both Examples 2 and 3 is AC-388® made by Rohm and Haas.

Note 4

The additives are those normally used in the production of paints, and include surfactants, thickeners, preservatives, fungicides, coalescing solvents, materials for the adjustment of pH, defoamers and driers. These are of no consequence in this invention.

## Claims

1. An aqueous paint comprising water, a resin binder, and pigment dispersed in the water, said pigment containing from 5% to 65% of titanium dioxide, rutile, characterized in that the balance of the pigment consists essentially of a mixture of pigmented vesiculated beads and opaque polymer particles in a ratio of from 30/70 to 90/10, the propagation of opaque polymer particles being smaller at higher pigment volume concentration.

2. An aqueous paint as recited in claim 1 in which said binder is an emulsion copolymer suspended in the water with the aid of a surfactant.

3. An aqueous paint as recited in claim 1 in which said paint is an air drying paint.

4. An aqueous paint as recited in claim 1 in which said vesiculated beads have an average particle diameter of from 3 to 30 µm and contain from 10% to 60%, based on their dry weight, of finely divided pigment.

5. An aqueous paint as recited in claim 4 in which the finely divided pigment in said vesiculated beads is titanium dioxide, rutile.

EP 0 113 435 B1

6. An aqueous paint as recited in claim 4 in which said opaque polymer particles are constituted by microvoid-containing particles having an average particle size in the range of 0.1 to 2.5 µm.

7. An aqueous paint as recited in claim 1 in which the total pigmentation includes up to about 30% of extender particles.

8. An aqueous paint as recited in claim 1 adapted to deposit a flat film in which the pigment volume concentration is from 60% to 80%, the pigment contains from 5% to 25% of titanium dioxide, rutile, and the balance of the pigment consists essentially of a mixture of pigmented vesiculated beads and opaque polymer particles in a ratio of from 80/20 to 90/10.

9. An aqueous paint as recited in claim 8 in which the proportion of titanium dioxide, rutile, is from 5% to 15% of total pigment.

10. An aqueous paint as recited in claim 9 in which said paint is an air drying paint in which said binder is an emulsion copolymer suspended in the water with the aid of a surfactant, said vesiculated beads have an average particle diameter of from 3 to 30 µm and contain from 10% to 60%, based on their dry weight, of titanium dioxide, rutile, and said opaque polymer particles are constituted by microvoid-containing particles having an average particle size in the range of 0.1 to 2.5 µm.

11. An aqueous paint as recited in claim 1 adapted to deposit a satin film in which the pigment volume concentration is from 25% to 50%, the pigment contains from 30% to 60% of titanium dioxide, rutile, and the balance of the pigment consists essentially of a mixture of pigmented vesiculated beads and opaque polymer particles in a ratio of from 60/40 to 70/30.

12. An aqueous paint as recited in claim 11 in which the proportion of titanium dioxide, rutile, is at least 40% of total pigment.

13. An aqueous paint as recited in claim 1 adapted to deposit a gloss film in which the pigment volume concentration is from 20% to 40%, the pigment contains from 35% to 65% of titanium dioxide, rutile, and the balance of the pigment consists essentially of a mixture of pigmented vesiculated beads and opaque polymer particles in a ratio of from 30/70 to 50/50.

14. An aqueous paint as recited in claim 13 in which the proportion of titanium dioxide, rutile, is from 40% to 50% of total pigment.

**Patentansprüche**

1. Wäßrige Anstrichmasse, enthaltend Wasser, ein Harzbindemittel und in dem Wasser dispergiertes Pigment, wobei das Pigment 5 bis 65% Titanoxid, Rutil, enthält, dadurch gekennzeichnet, daß der Rest des Pigments im wesentlichen aus einem Gemisch aus pigmentierten Vesikularperlen und opaken Polymerteilchen in einem Verhältnis von 30/70 bis 90/10 besteht, wobei der Anteil der opaken Polymerteilechen bei höheren Pigment-volumenkonzentrationen kleiner ist.

2. Wäßrige Anstrichmasse nach Anspruch 1, worin das Bindemittel ein Emulsionscopolymer darstellt, das mit Hilfe eines Tensids im Wasser suspendiert ist.

3. Wäßrige Anstrichmasse nach Anspruch 1, worin die Anstrichmasse lufttrocknend ist.

4. Wäßrige Anstrichmasse nach Anspruch 1, worin die Vesikularperlen einen durchschnittlichen Teilchendurchmesser von 3 bis 30 µm haben und 10 bis 60%, bezogen auf ihr Trockengewicht, feinteiliges Pigment enthalten.

5. Wäßrige Anstrichmasse nach Anspruch 4, worin das feinteilige Pigment in den Vesikularperlen Titandioxid, Rutil, darstellt.

6. Wäßrige Anstrichmasse nach Anspruch 4, worin die opaken Polymerteilchen aus Mikrohohlräume enthaltenden Teilchen mit einer durchschnittlichen Teilchengröße im Bereich von 0,1 bis 2,5 µm zusammengesetzt sind.

7.Wäßrige Anstrichmasse nach Anspruch 1, worin der gesamte Pigmentgehalt bis zu etwa 30 % Streckmittelteilchen enthält.

8. Wäßrige Anstrichmasse nach Anspruch 1 zur Abscheidung eines matten Films, worin die Pigmentvolumenkonzentration 60 bis 80% beträgt, das Pigment 5 bis 25% Titandioxid, Rutil enthält und der Rest des Pigments im wesentlichen aus einem Gemisch aus pigmentierten Vesikularperlen und opaken Polymerteilchen in einem Verhältnis von 80/20 bis 90/10 besteht.

9. Wäßrige Anstrichmasse nach Anspruch 10, worin der Anteil des Titandioxids, Rutil, 5 bis 15% des gesamten Pigments beträgt.

10. Wäßrige Anstrichmasse nach Anspruch 9, die eine lufttrocknende Anstrichmasse darstellt, in der das Bindemittel ein Emulsionscopolymer darstellt, das im Wasser mit Hilfe eines Tensids suspendiert ist, wobei die Vesikularperlen einen durchschnittlichen Teilchendurchmesser von 3 bis 30 µm haben und 10 bis 60%, bezogen auf ihr Trockengewicht, Titandioxid, Rutil, enthalten und die opaken Polymerteilchen aus Mikrohohlräume enthaltenden Teilchen mit einer durchschnittlichen Teilchengröße im Bereich von 0,1 bis 2,5 µm zusammengesetzt sind.

11. Wäßrige Anstrichmasse nach Anspruch 1 zur Abscheidung eines Satinfilms, worin die Pigmentvolumenkonzentration 25 bis 50% beträgt, das Pigment 30 bis 60% Titandioxid, Rutil, enthält und der Rest des Pigments im wesentlichen aus einem Gemisch aus pigmentierten Vesikularperlen und opaken Polymerteilchen in einem Verhältnis von 60/40 bis 70/30 besteht.

6

12. Wäßrige Anstrichmasse nach Anspruch 11, worin der Anteil des Titandioxids, Rutil, mindestens 40% des gesamten Pigments beträgt.

13. Wäßrige Anstrichmasse nach Anspruch 1 zur Abscheidung eines glänzenden Films, worin die Pigmentvolumenkonzentration 20 bis 40% beträgt, das Pigment 35 bis 65% Titandioxid, Rutil, enthält, und der Rest des Pigments im wesentlichen aus einem Gemisch aus pigmentierten Vesikularperlen und opaken Polymerteilchen in einem Verhältnis von 30/70 bis 50/50 besteht.

14. Wäßrige Anstrichmasse nach Anspruch 13, worin der Anteil des Titandioxids, Rutil, 40 bis 50% des gesamten Pigments beträgt.

**Revendications**

1. Peinture à l'eau comprenant de l'eau, un liant de type résine, et un pigment dispersé dans l'eau, ledit pigment contenant de 5% à 65% de dioxyde de titane, rutile, caractérisée par le fait que le complément du pigment est essentiellement constitué par un mélange de perles vésiculeuses pigmentées et de particules de polymère opaques dans un rapport allant de 30/70 à 90/10, la proportion de particules de polymère opaques étant inférieure à la concentration en volume de pigment supérieure.

2. Peinture à l'eau selon la revendicatoin 1, dans laquelle ledit liant est un copolymère en émulsion placé en suspension dans l'eau à l'aide d'un agent tensio-actif.

3. Peinture à l'eau selon la revendication 1, dans laquelle ladite peinture est une peinture séchant à l'air.

4. Peinture à l'eau selon la revendication 1, dans laquelle lesdites perles vésiculeuses présentent un diamètre moyen de particule allant de 3 à 30 μm et contiennent de 10% à 60%, sur la base de leur poids sec, de pigment finement divisé.

5. Peinture à l'eau selon la revendication 4, dans laquelle le pigment finement divisé se trouvement dans lesdits perles vésiculeuses est le dioxyde de titane, rutile.

6. Peinture à l'eau selon la revendication 4, dans laquelle lesdits particules de polymère opaques sont constituées par des particules contenant des microvides et présentant une dimension moyenne de particule qui se situe dans la plage 0,1 à 2,5 μm.

7. Peinture à l'eau selon la revendication 1, dans laquelle la pigmentation totale comprend jusqu'à environ 30% de particules de charge.

8. Peinture à l'eau selon la revendication 1, adaptée au dépôt d'un film mat, dans laquelle la concentration en volume de pigment va de 60% à 80%, le pigment contient de 5% à 25% de dioxyde de titane, rutile, et le complément du pigment est essentiellement constitué par un mélange de perles vésiculeuses pigmentées et de particules de polymère opaques dans un rapport allant de 80/20 à 90/10.

9. Peinture à l'eau selon la revendication 8, dans laquelle la proportion de dioxyde de titane, rutile, va de 5% à 15% du pigment total.

10. Peinture à l'eau selon la revendication 9, dans laquelle ladite peinture est une peinture séchant à l'air dans laquelle ledit liant est un copolymère en émulsion placé en suspension dans l'eau à l'aide d'un agent tensioactif, lesdites perles vésiculeuses présentent un diamètre moyen de particule allant de 3 à 30 μm et contiennent de 10% à 60%, sur la base de leur poids sec, de dioxyde de titane, rutile, et lesdites particules de polymère opaques sont constituées par des particules contenant des microvides et présentant une dimension moyenne de particule qui se situe dans la plage de 0,1 à 2,5 μm.

11. Peinture à l'eau selon la revendication 1, adaptée au dépôt d'un film satiné, dans laquelle la concentration en volume de pigment va de 25% à 50%, le pigment contient de 30% à 60% de dioxyde de titane, rutile, et le complément du pigment est essentiellement constitué par un mélange de perles vésiculeuses pigmentées et de particules de polymère opaques dans un rapport allant de 60/40 à 70/30.

12. Peinture à l'eau selon la revendication 11, dans laquelle la proportion de dioxyde de titane, rutile est d'au moins 40% du pigment total.

13. Peinture à l'eau selon la revendication 1, adaptée au dépôt d'un film brillant, dans laquelle la concentration en volume de pigment va de 20% à 40%, le pigment contient de 35% à 65% de dioxyde de titane, rutile, et le complément du pigment est essentiellement constitué par un mélange de perles vésiculeuses pigmentées et de particules de polymère opaques dans un rapport allant de 30/70 à 50/50.

14. Peinture à l'eau selon la revendication 13, dans laquelle la proportion de dioxyde de titane, rutile, va de 40% à 50% du pigment total.